# EUROPÄISCHE PATENTSCHRIFT

(11) **EP 0 650 238 B1**
(45) Veröffentlichungstag und Bekanntmachung des Hinweises auf die Patenterteilung: **19.11.1997**
(21) Anmeldenummer: 94202227.8
(22) Anmeldetag: 02.08.1994
(51) Int. Cl.: H02G 1/12

(54) **Vorrichtung zum Abisolieren von Runddrähten**
Device for stripping of round wires
Dispositif de dénudage de fils ronds

(30) Priorität: 26.10.1993 DE 4336539
(43) Veröffentlichungstag der Anmeldung: 26.04.1995
(73) Patentinhaber: Meteor Maschinen AG, 8604 Volketswil (CH)
(72) Erfinder: Ernst, Arnold, CH-8107 Buchs (CH)
(74) Vertreter: EGLI-EUROPEAN PATENT ATTORNEYS

(56) Entgegenhaltungen:
- EP-A- 0 364 006
- EP-A- 0 568 139
- US-A- 4 352 305

## Beschreibung

Die Erfindung betrifft eine Vorrichtung zum Abisolieren von Runddrähten mit den im Oberbegriff des Anspruchs 1 angegebenen Merkmalen.

Aus der DE-OS 35 15 223 A1 ist eine derartige Vorrichtung zum Abisolieren von lackisolierten Runddrähten bekannt, die Werkzeuge aufweist, die von einem Antrieb mit Drehwelle und damit verbundenen Werkzeugträgern aktivierbar sind und um den Draht zur Abspanung rotieren. Dabei kann die Drehwelle Schwenklager für die Werkzeugträger aufweisen, über welche die Werkzeuge, vorzugsweise drei Messer, auf den Drahtdurchmesser zugestellt werden. Auf der Welle ist ein axial verschiebbarer Verstellkonus angeordnet, der die schwenkbaren Werkzeugträger an ihren den Werkzeugen abgewandten Enden abstützt. Dem Verstellkonus ist eine Zustellmechanik mit einem Pneumatikzylinder zugeordnet, der die radial zustellbaren Werkzeuge in eine durch den Drahtdurchmesser vorbestimmte Position bringt. Das Gehäuse der Abisoliervorrichtung weist einen Schlitten auf, der gegen eine stationäre Vorrichtung, beispielsweise eine Wickelmaschine, relativ verschiebbar ist.

Es sind auch Abisoliergeräte bekannt, die gegebenenfalls auch als Verdrillgeräte verwendet werden können und die einen Messerkopf aufweisen, der auf eine Antriebswelle aufgesteckt wird und die Messer durch Rotation des Messerkopfes aufgrund der Fliehkraft an den Drahtdurchmesser zugestellt werden. Durch überlagerte Rotation und Längsbewegung der Messer gegenüber dem Draht erfolgt dessen Abisolierung.

Derartige Abisoliervorrichtungen sind als separate Zusatzgeräte ausgebildet, wobei diese bei einer Mehrfachwickelmaschine für elektrische Spulen an einem zusätzlichen Träger angeordnet sind, welcher zusammen mit den Abisoliergeräten gegenüber einem zweiten mit Drahtführern versehenem Träger der Wickelmaschine relativ verschiebbar ist.

Bei der in der Stammanmeldung beschriebenen Vorrichtung ist der Antriebsmotor für den Wickelkopf in einem koaxial mit diesem verlaufenden Antriebszylinder integriert, durch dessen hohle Rotorwelle der Wickeldraht hindurchgeführt wird und zwischen den drei Abisoliermessern und einen Drahtführer hindurch zu der zu bewickelnden Spule verläuft. Die Abisoliermesser sind an konisch verlaufenden schwenkbaren Haltearmen befestigt und stoßen gegen den Bund einer längs der Motorachse mit Hilfe eines Gewindes einstellbaren Hülse an. Wird die Hülse weiter herausgeschraubt, so vergrößert sich der Abstand der Messer in ihrem Anschlagzustand, und dieser Abstand wird entsprechend dem Durchmesser des abzuisolierenden Drahtes eingestellt. Diese Einstellung gestaltet sich jedoch recht kompliziert, da die Hülse durch die Messerarme hindurch schwierig erreichbar ist und der genaue Abstand durch Ausprobieren ermittelt werden muß, damit einerseits die Isolierung vollständig vom Draht entfernt wird, dieser aber andererseits noch nicht beschädigt wird.

Der hier zu beschreibenden Erfindung liegt die Aufgabe zugrunde, die Einstellung der Abisoliermesser auf den jeweiligen Drahtdurchmesser zu vereinfachen und ohne Probieren reproduzierbar zu machen. Ferner soll die Übertragung von Vibrationen durch den Antriebsmotor der Abisoliervorrichtung auf die Trägerteile für weitere Einheiten der Wickelmaschine weitgehend gedämpft werden.

Diese Aufgabe wird durch die im Kennzeichenteil des Anspruchs 1 angegebenen Merkmale gelöst. Weiterbildungen der Erfindung sind in den Unteransprüchen gekennzeichnet.

Durch die erfindungsgemäße Anordnung des Antriebsmotors für das Abisoliergerät seitlich von diesem wird dessen Innenraum für die Anordnung einer Gewindespindel zur Einstellung der hülsenförmigen Anschlagschraube für die Abisoliermesser frei, so daß man die Messer vom rückwärtigen Ende der Abisoliervorrichtung her über einen dort vorgesehenen Skalenring bequem vornehmen kann, ohne zwischen den Haltearmen der Messer hindurchgreifen zu müssen. Die Skaleneinteilung des Skalenrings kann in Drahtdurchmessern geeicht werden, so daß jegliches Ausprobieren entfällt und die Abisoliermesser auf beliebige Drahtdurchmesser genau und reproduzierbar eingestellt werden können.

Die Anordnung des Antriebsmotors mit dem Abisoliergerät auf einer gemeinsamen Aufnahmeplatte gibt die Möglichkeit, diese Einheit über Dämpfungselemente gegen den übrigen Teil der Vorrichtung abzustützen, so daß Vibrationen des Antriebsmotors nicht auf diese Teile übertragen werden. Bei einer speziellen Ausführungsform der Erfindung ist ein Absaugkanal für durch die Messer abgeschabte Teilchen der Isolation auf den Messerkopfbereich beschränkt, so daß die Absaugwirkung intensiviert wird.

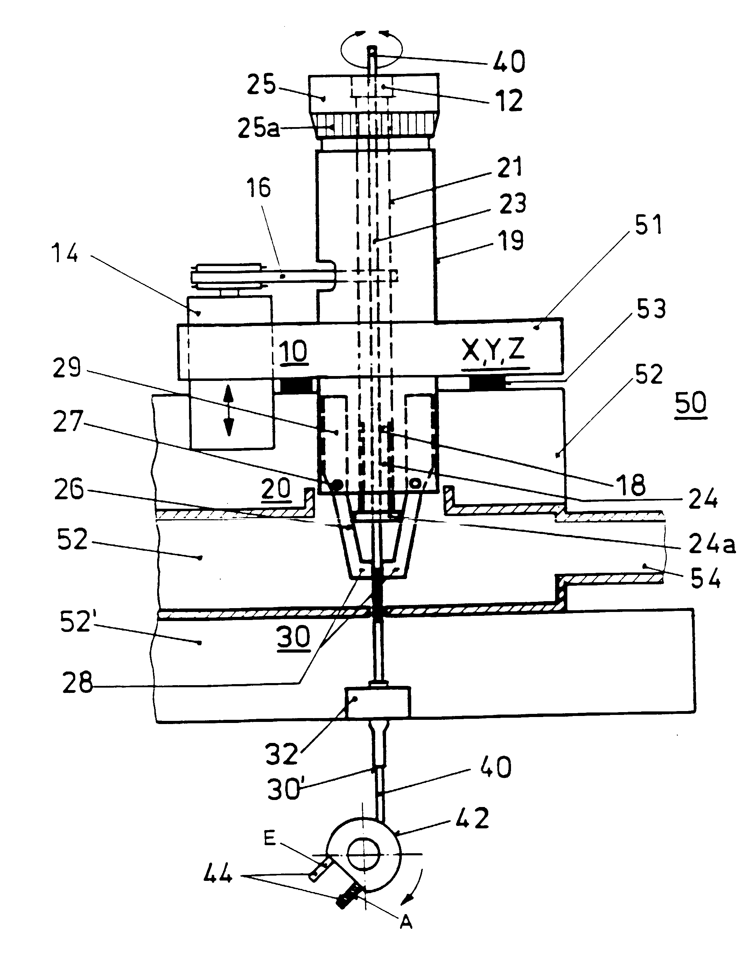

Die Erfindung sei nun anhand eines in der beiliegenden Zeichnung dargestellten Ausführungsbeispiels näher erläutert.

Das zylinderförmige Abisoliergerät 10 ist mit seinem Gehäuse 19 in einer Aufnahmeplatte 51 gelagert, die auch - seitlich vom Abisoliergerät - den elektrischen Antriebsmotor 14 aufnimmt. Dieser setzt über einen Zahnriemen 16 einen im Gehäuse 19 drehbar gelagerten Antriebszylinder 21 für einen Abisolierkopf 20 in Rotation. Im Abisolierkopf sind drei Haltearme in Form von Kipphebeln 26 jeweils um 120° versetzt angeordnet und in Drehpunkten 27 gelagert. An den Enden dieser Kipphebel sitzen spanabhebende Werkzeuge 28, vorzugsweise in Form von Messern. Bei Rotation des Abisolierkopfes werden an den entgegengesetzten Enden der Kipphebel 26 befindliche Fliehgewichte 29 nach außen gedrückt, so daß die Messer sich auf den zwischen ihnen hindurch verlaufenden Draht 40 zu bewegen und bei richtiger Einstellung der Anschlagschraube 24 die Isolierung abschaben, ohne den Draht selbst zu beschädigen.

Die Anschlagschraube 24 läßt sich über eine im Antriebszylinder 21 sitzende Einstellspindel 23 längs der Achse des Abisolierkopfes verstellen, wobei die konisch zueinander verlaufenden Bereiche der Kipphebel 26 jeweils mit einer anderen Stelle an einem Anschlagring 24a der Anschlagschraube 24 anliegen und dementsprechend der Messerabstand einstellbar ist. An ihrem in der Figur oberen Ende ist die durch die Hohlwelle 18 des Abisolierkopfes und des Antriebszylinders verlaufende Einstellspindel 23 mit einem drehbaren Skalenring 25 verbunden. Verdreht man mit diesem die Spindel, so wird dadurch die Anschlagschraube 24 axial zum Einstellen der Messer verschoben, und diese Einstellung läßt sich über die Skaleneinteilung 25a des Skalenringes 25 an einer Marke genau bestimmen und jederzeit reproduzieren, so daß man die Abisoliervorrichtung einfach, schnell und präzise auf den jeweiligen Drahtdurchmesser einstellen kann.

Der in den Isoliermessern hindurchlaufende Draht 40 gelangt zu einem röhrenförmigen Drahtführer 30 mit einem in einem Trägerteil 52' angeordneten Drahtführerhalter 32. Diesen durchläuft der Draht und verläßt ihn an einem Drahtführeraustritt 30', um zu einem Spulenkörper 42 zu gelangen und mit den abisolierten Stellen an dessen Anschlußstiften 44 durch Andrillen befestigt zu werden. In der Figur ist der Anfangsstift der Wicklung mit A und der Endstift mit E bezeichnet.

Die Aufnahmeplatte 51 für den Elektromotor 14 und den Abisolierkopf 20 ist über Dämpfungselemente 53 mit einem Trägerteil 52 der Wickelmaschine 50 verbunden, um Vibrationen von diesem Trägerteil fernzuhalten, welches noch weitere solche Einheiten, wie sie in der Figur dargestellt sind, trägt: Beispielsweise kann die Wickelmaschine sechs solche Abisolier/Drahtführungseinheiten aufweisen. Die Dämpfungselemente 53 können beispielsweise durch Gummipuffer realisiert werden, welche durch den Betrieb der Einheit entstehende Schwingungen oder Vibrationen weitgehend vom Trägerteil 52 fernhalten.

Im unmittelbaren Bereich um die Abisoliermesser 28 befindet sich ein Absaugkanal 54 für abgeschabte Teile der Isolierung, die durch einen in der Figur rechts gezeichneten Stutzen abgesaugt werden und damit den Drahtführer 30 nicht verstopfen oder die Maschine anderweitig verunreinigen können.

## Patentansprüche

1. Vorrichtung zum Abisolieren von lack- oder kunststoffisolierten Runddrähten (40) mittels eines Abisoliergerätes, mit mindestens drei in einem Abisolierkopf gelagerten aktivierbaren, unter Antrieb durch einen Motor (14) um den Draht rotierenden spanabhebenden Werkzeugen, welche dem jeweiligen Drahtdurchmesser entsprechend einstellbar sind, und mit zur Bewicklung einer elektrischen Spule vorgesehenen Drahtführern (30), wobei das Abisoliergerät mit den Drahtführern auf einem gemeinsamen Träger zu jeweils einer integrierten Abisolier/ Drahtführereinheit für jede Wickelstelle einer Spulenwickelmaschine zusammengefaßt ist und der Motor seitlich vom Abisoliergerät angeordnet und zusammen mit diesem auf einer gemeinsamen Aufnahmeplatte (51) montiert und über einen Antriebsriemen (16) mit einem Antriebszylinder (21) für den Abisolierkopf (20) verbunden ist, **dadurch gekennzeichnet,** daß ein zentrisch zwischen den spanabhebenden Werkzeugen (28) befindlicher Anschlagring (24a) einer Anschlagschraube (24) mit einer Einstellspindel (23) verbunden ist, die an ihrem entgegengesetzten Ende mit einem Skalenring (25) versehen ist.

2. Vorrichtung nach Anspruch 1, **dadurch gekennzeichnet**, daß die Aufnahmeplatte (51) über Dämpfungselemente (53) mit einem Trägerteil (52) verbunden ist.

3. Vorrichtung nach Anspruch 1, **dadurch gekennzeichnet**, daß der Antriebsriemen (16) ein Zahnriemen ist.

4. Vorrichtung nach Anspruch 1, **dadurch gekennzeichnet**, daß das Trägerteil (52) einen auf den Bereich des Abisolierkopfes (20) beschränkten Absaugkanal (54) aufweist.

## Claims

1. Device for stripping varnish-insulated or plastic-insulated round wires (40) by means of an insulation stripper, having at least three material-removing cutting tools which are mounted in a stripping head, can be activated, rotate around the wire when driven by a motor (14), and can be adjusted to correspond to the respective wire diameter, and having wire guides (30) that are provided for winding an electric coil, the insulation stripper, together with the wire guides, being combined on a common carrier to form in each case art integrated stripping/wire-guiding unit for each winding point of a coil-winding machine, and the motor being arranged at the side of the insulation stripper and, together with the latter, being mounted on a common mounting plate (51), and being connected via a drive belt (16) to a drive cylinder (21) for the stripping head (20), characterized in that a stop ring (24a), which is located centrally between the material-removing cutting tools (28) and belongs to a stop screw (24), is connected to an adjusting spindle (23) which is provided at its other end with a scale ring (25).

2. Device according to Claim 1, characterized in that the mounting plate (51) is connected via damping elements (53) to a carrier part (52).

3. Device according to Claim 1, characterized in that the drive belt (16) is a toothed belt.

4. Device according to Claim 1, characterized in that the carrier part (52) has a suction duct (54) that is restricted to the region of the stripping head (20).

## Revendications

1. Dispositif pour le dénudage de fils (40) à section circulaire isolés à l'aide d'un vernis ou d'une matière synthétique, au moyen d'un appareil destiné à dépouiller l'isolation, comprenant au moins trois outils d'usinage montés dans une tête de dénudage, aptes à être activés et rotatifs autour du fil par entraînement via un moteur (14), qui peuvent être réglés en fonction du diamètre respectif du fil, et comprenant des guide-fils (30) prévus pour le bobinage d'une bobine électrique, dans lequel l'appareil destiné à dépouiller l'isolation est rassemblé avec les guide-fils sur un support commun pour former respectivement une unité intégrée de dénudage/guidage de fil pour chaque endroit de bobinage d'une machine à bobiner, le moteur tant disposé latéralement par rapport à l'appareil destiné à dépouiller l'isolation, monté conjointement avec ce dernier sur une plaque de réception commune (51) et relié, via une courroie d'entraînement (16), à un cylindre d'entraînement (21) pour la tête de dénudage (20), caractérisé en ce qu'une bague de butée (24a) d'une vis de butée (24), disposée en position centrale entre les outils d'usinage (28), est reliée à une tige de réglage (23) qui est munie d'un anneau gradué (25) à son extrémité opposée.

2. Dispositif selon la revendication 1, caractérisé en ce que la plaque de réception (51) est reliée, via des éléments d'amortissement (53), à un élément de support (52).

3. Dispositif selon la revendication 1, caractérisé en ce que la courroie d'entraînement (16) est une courroie dentée.

4. Dispositif selon la revendication 1, caractérisé en ce que l'élément de support (52) présente un canal d'aspiration (54) limité à la zone occupée par la tête de dénudage (20).
